# FASCICULE DE BREVET EUROPEEN

(11) **EP 2 889 801 B1**
(45) Date de publication et mention de la délivrance du brevet: **01.03.2017**
(21) Numéro de dépôt: 14200520.6
(22) Date de dépôt: 30.12.2014
(51) Int. Cl.: G06F 21/79

(54) **Procédé d'accès à des données stockées de manière sécurisée dans une mémoire non sécurisée, avec protection en intégrité temporelle desdites données**
Zugriffsverfahren auf sicher gespeicherte Daten in einem nicht gesicherten Datenspeicher, mit zeitlichem Schutz der Integrität dieser Daten
Method for accessing data stored securely in a non-secure memory, with temporal integrity protection of said data

(30) Priorité: 30.12.2013 FR 1303112
(43) Date de publication de la demande: 01.07.2015
(73) Titulaire: Thales, 92200 Neuilly Sur Seine (FR)
(72) Inventeur: Waroquier, Nicolas, 92622 Gennevilliers (FR); Santarnecchi, Yannick, 92622 Gennevilliers (FR); Bernier, Laurent, 92622 Gennevilliers (FR)
(74) Mandataire: Lavoix

(56) Documents cités:
- WO-A1-2013/100964
- US-A1- 2009 113 117

## Description

La présente invention concerne un procédé d'accès à des informations stockées de manière sécurisée dans des blocs de données d'une mémoire non sécurisée, à chaque bloc de données étant associé un compteur enregistré dans la mémoire non sécurisée, ledit compteur étant adapté pour être incrémenté à chaque écriture dudit bloc de données.

Dans ce qui suit, le terme « sécurisé » appliqué à une donnée signifie que ladite donnée bénéficie de mesures visant à garantir son intégrité. Appliqué à un organe de traitement ou de stockage de données, ce terme signifie que ledit organe bénéficie de mesures visant à garantir l'intégrité des données manipulées ou stockées.

Il existe des systèmes tels que les cartes à microcircuit, comportant un espace de stockage de données sécurisé. Toutefois, cet espace de stockage présente généralement, du fait de son coût important, une capacité insuffisante pour stocker toutes les données sensibles d'une ou de plusieurs applications installées dans le système. Un tel système est donc généralement associé à une mémoire non sécurisée, de coût inférieur.

On distingue communément trois types de protection de l'intégrité d'une donnée dans une mémoire non sécurisée :
- la protection en intégrité de contenu vise à s'assurer qu'une donnée n'a pas été altérée ; à cet effet, un motif d'intégrité de la donnée est calculé par application d'une fonction de hachage à la donnée ;
- la protection en intégrité spatiale vise à s'assurer que la donnée positionnée à une adresse de la mémoire n'a pas été remplacée par une autre donnée précédemment positionnée à une autre adresse de la mémoire ; à cet effet, un motif d'intégrité spatiale de la donnée, fonction de ladite donnée et de son adresse, est calculé ; et
- la protection en intégrité temporelle vise à protéger une donnée contre une attaque de type rejeu (en anglais : « replay attack ») ; à cet effet, un compteur est incrémenté ou décrémenté à chaque accès à ladite donnée, et ce compteur est sécurisé.

US 2007/0130470 décrit un exemple de protection en intégrité temporelle d'une donnée stockée dans une mémoire non sécurisée et bénéficiant de mesures de gestion de droits numériques (mieux connues sous l'acronyme de DRM, de l'anglais « Digital Right Management »). Un compteur DRM est associé à la donnée, et ce compteur est décrémenté à chaque copie de la donnée. Un haché du compteur DRM est calculé et stocké dans la mémoire non-sécurisée, ledit haché étant recalculé à chaque accès à la mémoire non-sécurisée en utilisant une nouvelle clé de hachage. Il est ainsi impossible pour un attaquant de rejouer la donnée en substituant aux valeurs courantes du compteur DRM et de son haché les valeurs de ceux-ci à un instant antérieur : le système détecterait immédiatement la fraude par le fait que la clé de hachage du haché ne serait pas la clé de hachage couramment utilisée par le système.

Cette méthode de protection en intégrité temporelle ne donne toutefois pas entière satisfaction. En effet, elle nécessite des accès récurrents à la mémoire non-sécurisée pour pouvoir vérifier tous les hachés qui y sont mémorisés et enregistrer les nouveaux hachés calculés au moyen de la nouvelle clé de hachage. Ces accès répétés ralentissent considérablement le système.

EP-A-2 196 913 décrit un procédé de protection de l'intégrité de données enregistrées dans une mémoire non-sécurisée dans lequel, pour chaque couple de données, une signature dudit couple de données est calculée par application d'une fonction de hachage au couple de données, et stockée dans la mémoire non-sécurisée. Les signatures sont sécurisées au moyen d'un arbre de Merkle (« hash tree » en anglais) dont la signature racine est stockée dans une mémoire sécurisée du système. Lors du contrôle de l'intégrité d'une donnée à laquelle il est accédé, les signatures utilisées pour ce contrôle d'intégrité sont copiées dans la mémoire sécurisée, de façon à minimiser les accès à la mémoire non-sécurisée.

Toutefois, ce procédé ne permet pas d'assurer la protection en intégrité temporelle des données stockées dans la mémoire non-sécurisée.

D'autres exemples de protection de l'intégrité de données enregistrées dans une mémoire non-sécurisée sont décrits dans US-A-2009/0113117 et dans WO-A-2013/100964.

Un objectif de l'invention est de permettre la protection en intégrité temporelle de données stockées dans une mémoire non-sécurisée en minimisant l'emploi de mémoire sécurisée et en minimisant la dégradation de performances liée à l'utilisation de la mémoire non-sécurisée.

A cet effet, l'invention a pour objet un procédé du type précité, comprenant les étapes suivantes :
- lecture, dans la mémoire non sécurisée, d'un compteur enregistré associé à un bloc de données auquel il est accédé,
- contrôle de l'intégrité du compteur, et
- mémorisation, dans une mémoire sécurisée, d'un compteur mémorisé consistant en une copie dudit compteur enregistré.

Selon des modes de réalisation particuliers de l'invention, le procédé présente également l'une ou plusieurs des caractéristiques suivantes, prise(s) isolément ou suivant toute(s) combinaison(s) techniquement possible(s) :
- un indicateur de compteur est associé au ou à chaque compteur mémorisé, ledit indicateur signalant si le compteur mémorisé présente une valeur différente ou non de celle du compteur correspondant enregistré dans la mémoire non sécurisée ;
- ledit procédé comprend les étapes suivantes :
   - contrôle de l'indicateur de compteur associé à un compteur mémorisé,
   - si ledit indicateur de compteur signale que le compteur mémorisé présente une valeur différente de celle du compteur correspondant enregistré dans la mémoire non sécurisée, remplacement de la valeur dudit compteur enregistré par la valeur dudit compteur mémorisé, et
   - effacement du compteur mémorisé de la mémoire sécurisée.
- l'adresse de chaque compteur enregistré dans la mémoire non sécurisée comprend un premier bloc d'adresse et un deuxième bloc d'adresse, au premier bloc d'adresse étant associée une pluralité de premiers espaces de stockage de la mémoire sécurisée, et, lors de l'étape de mémorisation, la valeur du compteur enregistré est mémorisée dans l'un desdits premiers espaces de stockage, le deuxième bloc d'adresse étant mémorisé dans un deuxième espace de stockage de la mémoire sécurisée, associé au premier espace de stockage où est stocké le compteur mémorisé ;
- la mémoire sécurisée présente une capacité inférieure à la capacité nécessaire au stockage de tous les compteurs enregistrés ;
- à chaque bloc de données est associé un motif d'intégrité du bloc de données, enregistré dans la mémoire non sécurisée, la valeur dudit motif d'intégrité dépendant de la valeur du compteur associé audit bloc de données, le procédé comprenant les étapes suivantes :
   - calcul d'un motif d'intégrité calculé du bloc de données, à partir du bloc de données et du compteur, et
   - comparaison du motif d'intégrité calculé avec le motif d'intégrité enregistré,
le bloc de données étant déclaré intègre à condition que le motif d'intégrité calculé soit égal au motif d'intégrité enregistré ;
- l'étape de contrôle de l'intégrité du compteur comporte les sous-étapes suivantes :
   - calcul d'au moins une empreinte de compteur associée au compteur en fonction de la valeur dudit compteur, et
   - comparaison de la ou chaque empreinte de compteur calculée avec une empreinte de compteur correspondante mémorisée dans la mémoire sécurisée, lorsqu'une telle empreinte de compteur mémorisée existe, ou, lorsqu'une telle empreinte de compteur mémorisée n'existe pas, avec une empreinte de compteur correspondante enregistrée dans la mémoire non sécurisée ;
- ledit procédé comprend, pour chaque empreinte de compteur enregistrée qui est comparée lors du contrôle d'intégrité à une empreinte de compteur calculée, une étape de mémorisation, dans une mémoire sécurisé, d'une empreinte de compteur mémorisée consistant en une copie de ladite empreinte de compteur enregistrée ;
- un indicateur d'empreinte est associé à chaque empreinte de compteur mémorisée dans la mémoire sécurisée, ledit indicateur signalant si l'empreinte de compteur mémorisée présente une valeur différente ou non de celle de l'empreinte de compteur enregistrée correspondante ;
- ledit procédé comprend les étapes suivantes :
   - contrôle de l'indicateur d'empreinte associé à une empreinte de compteur mémorisée
   - si ledit indicateur d'empreinte signale que l'empreinte de compteur mémorisée présente une valeur différente de celle de l'empreinte de compteur correspondante enregistrée dans la mémoire non sécurisée, remplacement de la valeur de ladite empreinte de compteur enregistrée par la valeur de ladite empreinte de compteur mémorisée, et
   - effacement de l'empreinte de compteur mémorisée de la mémoire sécurisée ;
- ledit procédé comprend les étapes suivantes :
   - incrémentation du compteur mémorisé,
   - calcul d'au moins une empreinte de compteur actualisée associée au compteur en fonction de la valeur incrémentée du compteur mémorisé, et
   - mémorisation, dans la mémoire sécurisée, de la ou chaque empreinte de compteur actualisée, en remplacement de l'empreinte de compteur mémorisée correspondante lorsqu'une telle empreinte de compteur mémorisée existe ;
- ledit procédé comprend une étape d'incrémentation d'un compteur d'empreinte mémorisé dans une mémoire sécurisée, l'empreinte de compteur actualisée associée au compteur étant calculée en fonction de la valeur incrémentée dudit compteur d'empreinte ;
- une unique empreinte de compteur associée au compteur est calculée, et le compteur est déclaré intègre si et seulement si ladite empreinte de compteur calculée est égale à l'empreinte de compteur avec laquelle elle est comparée.

D'autres caractéristiques et avantages de l'invention apparaîtront à la lecture de la description qui va suivre, donnée uniquement à titre d'exemple et faite en se référant aux dessins annexés, dans lesquels :
- la Figure 1 est une vue schématique d'un système informatique adapté pour mettre en oeuvre un procédé selon l'invention,
- la Figure 2 illustre un procédé de génération d'un motif d'intégrité d'un bloc de données d'une mémoire non sécurisée du système informatique de la Figure 1, pour la sécurisation dudit bloc de données,
- la Figure 3 illustre un procédé génération d'une empreinte de compteur, pour la sécurisation d'un compteur associé à un bloc de données de la mémoire non sécurisée,
- la Figure 4 représente une adresse d'une donnée dans la mémoire non sécurisée,
- la Figure 5 est une vue schématique d'une mémoire cache du système informatique de la Figure 1,
- la Figure 6 est un diagramme synoptique illustrant un procédé d'accès à une information stockée dans une mémoire non sécurisée du système informatique de la Figure 1, et
- la Figure 7 est un diagramme synoptique illustrant un procédé de stockage d'une information dans la mémoire non sécurisée du système informatique de la Figure 1

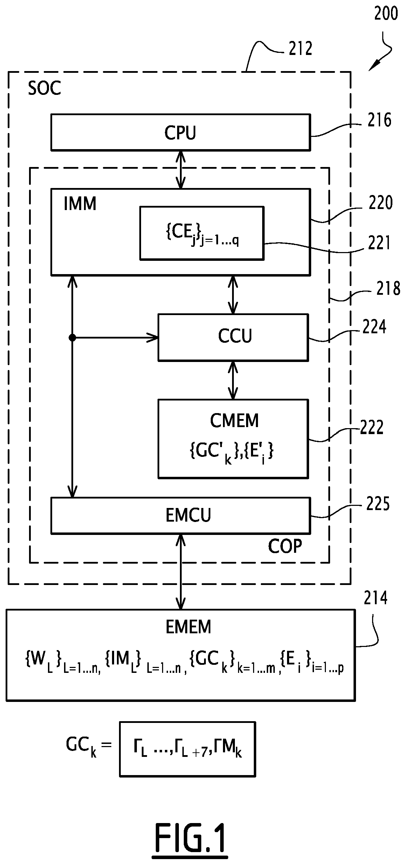

Le système informatique 210, représenté sur la Figure 1, comprend un système 212 de traitement de données sécurisées et une mémoire externe 214 non sécurisée connectée au système 212.

Le système de traitement 212 comprend une unité de calcul 216 et une unité d'interface 218 faisant l'interface entre l'unité de calcul 216 et la mémoire externe 214.

L'unité d'interface 218 comprend un module 220 de gestion de l'intégrité et, optionnellement, du chiffrement des données, une première mémoire cache 222 sécurisée, une unité 224 de contrôle de la mémoire cache 222, et une unité 225 de contrôle de la mémoire externe 214.

Le module de gestion 220 est adapté pour dialoguer avec l'unité de calcul 216, l'unité de contrôle 224, et l'unité de contrôle 224. L'unité de contrôle 224 est adaptée pour dialoguer avec le module de gestion 220 et le module de contrôle 225, et pour lire et écrire des données dans la mémoire externe 214 et dans la mémoire cache 222. L'unité de contrôle 225 est adaptée pour dialoguer avec le module de gestion 220 et le module de contrôle 224, et pour écrire et lire des données dans la mémoire externe 214.

La mémoire externe 214 comprend une pluralité de pages (non représentées) stockant chacune des blocs de données W_{I} (avec I entier naturel compris entre 1 et n, n étant un entier naturel), des motifs d'intégrités IM_{I} chacun associé à un bloc de données W_{I} correspondant, des compteurs globaux enregistrés GCₖ (avec k entier naturel compris entre 1 et m, m étant un entier naturel), et des empreintes de compteurs Eᵢ (avec i entier naturel compris entre 0 et p, p étant un entier naturel). La mémoire cache 222 stocke des compteurs globaux mémorisés GC'ₖ et des empreintes de compteurs mémorisées E'ᵢ. Le module de gestion 220 comprend une deuxième mémoire cache 221 sécurisée stockant des compteurs d'empreinte CEⱼ (avec j entier naturel compris entre 1 et q, q étant un entier naturel).

Dans la suite, le qualificatif « mémorisé » qualifie les données stockées dans la première ou la deuxième mémoire sécurisée 221, 222, et le qualificatif « enregistrée » qualifie les données stockées dans la mémoire non sécurisée 214.

Chaque compteur global GCₖ fait typiquement seize octets. Il comprend une pluralité de compteurs mineurs Γ_{I}...Γ_{I+7}, chacun associé à un bloc de données W_{I}...W_{I+7} correspondant, et un compteur majeur ΓMₖ. Chaque compteur mineur Γ_{I}...Γ_{I+7} fait typiquement huit bits et est adapté pour être incrémenté à chaque accès en écriture au bloc de données W_{I}...W_{I+7} associé. Le compteur majeur ΓMₖ fait typiquement soixante-quatre bits et est adapté pour être incrémenté à chaque débordement de mémoire de l'un des compteurs mineurs Γ_{I}...Γ_{I+7}. Le compteur global GCₖ permet ainsi de conserver un compte du nombre d'accès aux blocs de données W_{I}...W_{I+7}.

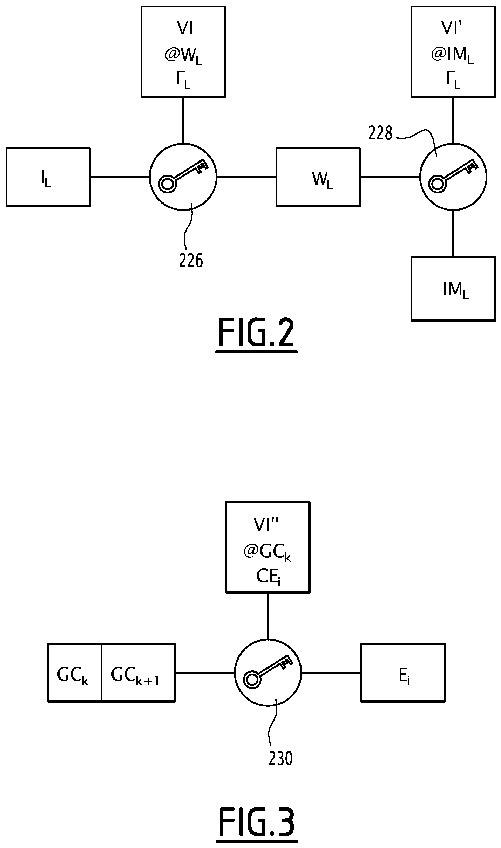

Chaque bloc de données W_{I} stocke une information I_{I} (Figure 2). Cette information I_{I} est présente sous forme chiffrée dans le bloc de données W_{I}. Elle est en outre protégée en intégrité spatiale. Le procédé permettant d'obtenir le chiffrement de l'information I_{I} en même temps que sa protection en intégrité spatiale est illustré sur la Figure 2. Comme visible sur la partie gauche de cette Figure, une première clé de chiffrement 226 est appliquée à l'information I_{I} avant son enregistrement dans le bloc de données Wₗ, ladite clé de chiffrement 226 employant un premier vecteur d'initialisation VI contenant l'adresse @W_{I} du bloc de données W_{I} dans la mémoire externe 214 et le compteur mineur Γ_{I} associé au bloc de données W_{I}.

Chaque motif d'intégrité IM_{I} contribue à la protection de l'intégrité de contenu et de l'intégrité temporelle de l'information I_{I} stockée dans le bloc de données Wₗ. A cet effet, comme illustré sur la Figure 2, chaque motif d'intégrité IM_{I} est calculé par application d'une deuxième clé de chiffrement 228 au bloc de données W_{I}, ladite clé de chiffrement 228 employant un deuxième vecteur d'initialisation VI' contenant l'adresse @IM_{I} du motif d'intégrité IM_{I} dans la mémoire externe 214 et le compteur Γ_{I} associé au bloc de données W_{I}.

On notera que cet exemple de calcul des motifs d'intégrité IM_{I} n'est pas restrictif. En variante, chaque motif d'intégrité est associé à plusieurs blocs de données, ledit motif d'intégrité étant obtenu à l'aide d'une fonction de hachage appliquée auxdits blocs de données préalablement concaténés.

Les empreintes de compteurs enregistrées Eᵢ sont obtenues par application d'une fonction de hachage à un couple de compteurs globaux GCₖ, GCₖ₊₁. En particulier, comme représenté sur la Figure 3, chaque empreinte de compteur Eᵢ est calculée par application d'une troisième clé de chiffrement 230 au couple des compteurs globaux GCₖ, GCₖ₊₁, préalablement concaténés, ladite clé de chiffrement 230 employant un troisième vecteur d'initialisation VI" contenant l'adresse @GCₖ du compteur global GCₖ dans la mémoire externe 214 et un compteur d'empreinte CEⱼ associé à l'empreinte Eᵢ.

On notera que ce mode de calcul des empreintes de compteurs Eᵢ n'est pas limitatif. En variante, chaque empreinte de compteur Eᵢ est obtenue par application d'une fonction de hachage à un unique compteur global GCₖ, ou à plus de deux compteurs globaux GCₖ.

A chaque compteur global GCₖ est associée une unique empreinte Eᵢ. En d'autres termes, chaque compteur global GCₖ est utilisé dans le calcul d'une unique empreinte Eᵢ.

Chaque compteur d'empreinte CEⱼ est associé à une pluralité d'empreintes Eᵢ, par exemple seize empreintes Eᵢ, et est adapté pour être incrémenté à chaque incrémentation d'un compteur global GCₖ utilisé dans le calcul de l'une des empreintes Eᵢ à laquelle il est associé. Chaque compteur d'empreinte CEⱼ fait typiquement seize octets.

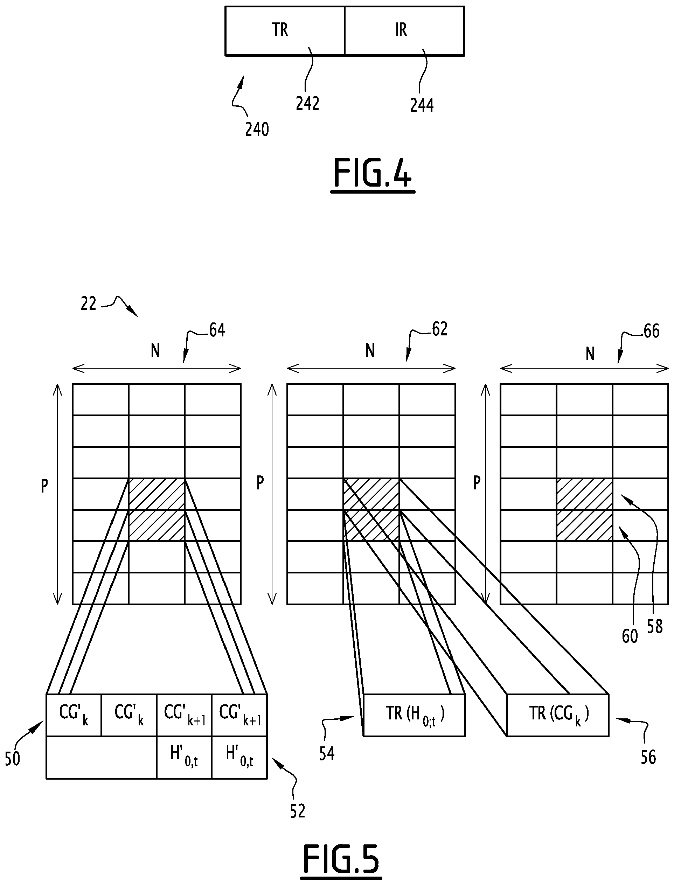

En référence à la Figure 4, le module de contrôle 225 est adapté pour aller lire une donnée enregistrée à un emplacement prédéterminé de la mémoire 214, ou aller écrire une donnée audit emplacement, à condition de recevoir une adresse 240 identifiant ledit emplacement. Cette adresse est typiquement communiquée par l'unité de calcul 216. Elle comprend une balise 242, formée par les bits de poids fort, et un index 244, formé par des bits de poids plus faible.

En référence à la Figure 5, la mémoire cache 222 comprend une pluralité de blocs mémoire 250, 252, 254, 256, 258, 260 organisés en trois sous-mémoires 262, 264, 266 distinctes, de telle sorte que chaque sous-mémoire 262, 264, 266 comprenne le même nombre de blocs mémoire 250, 252, 254, 256, 258, 260 que chaque autre sous-mémoire.

Chaque bloc mémoire 250, 252, 254, 256, 258, 260 a typiquement une taille de trente-deux octets.

Chaque sous-mémoire 262, 264, 266 a un nombre de voies X et une profondeur Y prédéterminés, le nombre de voies X de chaque sous-mémoire 262, 264, 266 étant égal au nombre de voies X de chaque autre sous-mémoire, et la profondeur Y de chaque sous-mémoire 262, 264, 266 étant égale à la profondeur Y de chaque autre sous-mémoire. L'emplacement de chaque bloc mémoire 250, 252, 254, 256, 258, 260 dans la sous-mémoire 262, 264, 266 correspondante est identifié au moyen de la voie à laquelle il appartient, et de sa profondeur dans ladite sous-mémoire 262, 264, 266.

La mémoire cache 222 présente une capacité inférieure à la capacité nécessaire au stockage de toutes les empreintes de compteur Eᵢ.

L'unité de calcul 216 est programmée pour demander la transmission d'une information I_{I} enregistrée à un emplacement prédéterminé de la mémoire externe 214. A cet effet, l'unité de calcul 216 est programmée pour émettre une requête d'accès à ladite information I_{I}, comprenant l'adresse @W_{I} correspondant audit emplacement, à destination du module de gestion 220.

Le module de gestion 220 est programmé pour, sur réception d'une requête d'accès émise par l'unité de calcul 216, émettre à destination de l'unité de contrôle 225 une première requête de lecture du bloc de données W_{I} positionné à l'emplacement correspondant à l'adresse @W_{I}, ladite requête de lecture comprenant ladite adresse @W_{I}. Le module de gestion 220 est également programmé pour identifier les adresses @IM_{I}, @GCₖ du motif d'intégrité IM_{I} et du compteur global GCₖ associés audit bloc de données W_{I}, ainsi que l'adresse @Eᵢ de l'empreinte de compteur de base Eᵢ associée audit compteur global GCₖ.

Le module de gestion 220 est programmé pour émettre à destination de l'unité de contrôle 224 une requête d'accès à un compteur global mémorisé GC'ₖ correspondant au compteur global enregistré GCₖ, et à une empreinte de compteur mémorisée E'ᵢ correspondant à l'empreinte de compteur enregistrée Eᵢ. Ladite requête d'accès comprend les adresses @GCₖ et @Eᵢ du compteur global enregistré GCₖ et de l'empreinte de compteur enregistrée Eᵢ.

L'unité de contrôle 224 est programmée pour, à la réception d'une requête d'accès émise par le module de gestion 220, consulter une première sous-mémoire 262 de la mémoire cache 222 pour voir si, dans l'un des blocs mémoires 254, 256 situés à une profondeur de la première sous-mémoire 262 correspondant à l'index de l'adresse @GCₖ ou @Eᵢ contenue dans ladite requête, est mémorisée la balise de ladite adresse @GCₖ, @Eᵢ. L'unité de contrôle 224 est également programmée pour :
- en cas de correspondance entre le contenu de l'un des blocs mémoires 254, 256 et la balise de l'adresse @GCₖ ou @Eᵢ, lire un bloc mémoire 250, 252 situé à un emplacement correspondant d'une deuxième sous-mémoire 264 de la mémoire cache 222, et retourner le contenu dudit bloc mémoire 250, 252 au module de gestion 220, et
- en cas de non-correspondance entre la balise de l'adresse @GCₖ, @Eᵢ et le contenu de chacun des blocs mémoires 254, 256 positionnés à ladite profondeur, émettre à destination de l'unité de contrôle 225 une deuxième requête de lecture de la donnée enregistrée positionnée dans la mémoire externe 214 à l'emplacement correspondant à l'adresse, puis, après lecture de ladite donnée dans la mémoire externe 214 par l'unité 225 et transmission de cette donnée à l'unité 224, mémoriser une copie de la donnée dans la mémoire cache 222 et la transmettre au module de gestion 220.

Pour mémoriser une copie de donnée dans la mémoire cache 222, l'unité de contrôle 224 est programmée pour identifier, à la profondeur de la deuxième sous-mémoire 264 correspondant à l'index de l'adresse @GCₖ, @Eᵢ dans la mémoire externe 214 dudit compteur global GCₖ, respectivement de ladite empreinte de compteur Eᵢ, un bloc mémoire vide, et pour stocker ladite copie dans ledit bloc mémoire. L'unité de contrôle 224 est également programmée pour stocker la balise de l'adresse @GCₖ, @Eᵢ dans le bloc mémoire correspondant de la première sous-mémoire 262.

L'unité de contrôle 224 est programmée pour, en cas d'occupation de tous les blocs mémoires 250, 252 disposés à la profondeur de la deuxième sous-mémoire 264 correspondant à l'index de l'adresse @GCₖ, @Eᵢ, enregistrer la copie dans un bloc mémoire aléatoire parmi lesdits blocs mémoires 250, 252. En variante, l'unité de contrôle 224 est programmée pour enregistrer la copie dans celui des blocs mémoires 250, 252 dont l'utilisation remonte au plus longtemps.

L'unité de contrôle 224 est également programmée pour, préalablement à l'enregistrement de la copie dans un bloc mémoire 250, 252 occupé, contrôler que la valeur de la donnée GC'ₖ|GC'ₖ₊₁, E'ᵢ mémorisée dans ledit bloc mémoire 250, 252 est égale à la valeur de la donnée enregistrée GCₖ|GCₖ₊₁, Eᵢ correspondante dans la mémoire externe 214. A cet effet, l'unité de contrôle 224 est programmée pour contrôler l'état d'un bit de contrôle stocké dans le bloc mémoire correspondant 258, 260 de la troisième sous-mémoire 266 et, selon l'état dudit bit de contrôle, en déduire si la valeur de la donnée mémorisée GC'ₖ|GC'ₖ₊₁, E'ᵢ est égale ou non à la valeur de la donnée enregistrée GCₖ|GCₖ₊₁, Eᵢ correspondante. L'unité de contrôle 224 est programmée pour, en cas de différence de valeurs entre la donnée mémorisée GC'ₖ|GC'ₖ₊₁, E'ᵢ et la donnée enregistrée GCₖ|GCₖ₊₁, Eᵢ correspondante, commander l'enregistrement de la valeur de la donnée mémorisée GC'ₖ|GC'ₖ₊₁, E'ᵢ dans la mémoire externe 214 en remplacement de la valeur de la donnée enregistrée GCₖ|GCₖ₊₁, Eᵢ.

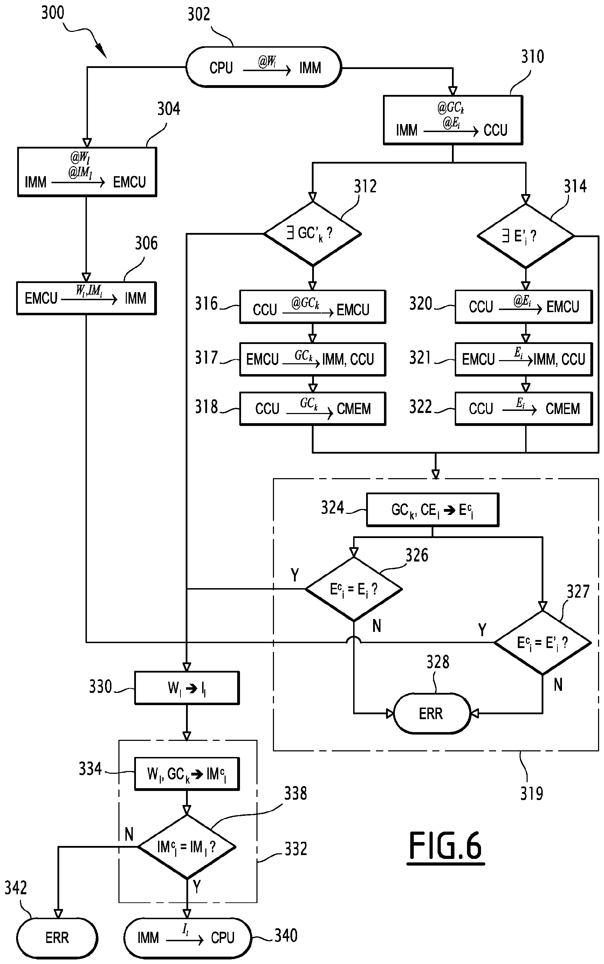

Le module de gestion 220 est programmé pour, à la réception du compteur global enregistré GCₖ correspondant à un bloc de données W_{I}, contrôler l'intégrité dudit compteur global enregistré GCₖ. A cet effet, le module de gestion 220 est programmé pour calculer la valeur d'une empreinte de compteur calculée E^{c}ᵢ (Figure 6) associée au compteur global enregistré GCₖ, par application de la clé de chiffrage 230 utilisant le vecteur d'initialisation VI" au couple de compteurs globaux formé par le compteur global enregistré GCₖ et un compteur global enregistré adjacent GCₖ₊₁, et pour comparer ladite valeur calculée E^{c}ᵢ à la valeur de l'empreinte de compteur mémorisée E'ᵢ correspondante ou, en l'absence d'empreinte de compteur de base mémorisée, à la valeur de l'empreinte de compteur de base enregistrée Eᵢ correspondante. Le module de gestion 220 est programmé pour déclarer le compteur global enregistré GCₖ intègre lorsque la valeur de l'empreinte de compteur de base calculée E^{c}ᵢ est égale à la valeur de l'empreinte de compteur mémorisée E'ᵢ ou à la valeur de l'empreinte de compteur enregistrée Eᵢ, et pour envoyer un message d'erreur à l'unité de calcul 16 lorsque la valeur de l'empreinte de compteur de base calculée E^{c}ᵢ est différente de la valeur de l'empreinte de compteur mémorisée E'ᵢ ou de la valeur de l'empreinte de compteur enregistrée Eᵢ.

Le module de gestion 220 est programmé pour, lorsque le compteur global enregistré GCₖ associé au bloc de données W_{I} est déclaré intègre, ou lorsqu'un compteur global mémorisé GC'ₖ correspondant audit compteur global enregistré GCₖ existe, contrôler l'intégrité du bloc de données W_{I}. A cet effet, le module de gestion 220 est programmé pour calculer une valeur d'un motif d'intégrité calculé IM^{c}_{I} (Figure 6) du bloc de données W_{I}, par application de la clé de chiffrage 228 utilisant le vecteur d'initialisation VI' au bloc de données W_{I}, pour comparer la valeur du motif d'intégrité calculé IM^{c}_{I}, à la valeur du motif d'intégrité enregistré IM_{I}, et pour déclarer le bloc de données W_{I} intègre si et seulement si la valeur du motif d'intégrité calculé IM^{c}_{I} est égale à la valeur du motif d'intégrité enregistré IM_{I}.

Le module de gestion 220 est également programmé pour déchiffrer ledit bloc de données W_{I} pour en extraire l'information I_{I} correspondante. A cet effet, le module de gestion 220 est adapté pour appliquer la clé de chiffrement 226 au bloc de données W_{I}, en utilisant le vecteur d'initialisation VI, pour déchiffrer le bloc de données W_{I}.

Le module de gestion 220 est programmé pour transmettre l'information I_{I} à l'unité de calcul 216 si et seulement si le bloc de données W_{I} a été déclaré intègre. Le module de gestion 220 est programmé pour transmettre un message d'erreur à l'unité de calcul 216 dans tous les autres cas.

De plus, le module de gestion 220 est programmé pour, pour chaque information I_{I} transmise par l'unité de calcul 216 et enregistrée dans la mémoire 214 :
- commander l'incrémentation du compteur global mémorisé GC'ₖ associé à ladite information I_{I},
- commander l'incrémentation du compteur d'empreinte CEⱼ associé à l'empreinte Eᵢ dudit compteur global mémorisé GC'ₖ,
- calculer un motif d'intégrité actualisé du bloc de données W_{I} où est stockée l'information I_{I} en fonction de la nouvelle valeur dudit compteur global mémorisé GC'ₖ, et
- calculer une empreinte actualisée dudit compteur global mémorisé GC'ₖ en fonction de la nouvelle valeur dudit compteur global mémorisé GC'ₖ, par application de la clé de chiffrage 230 utilisant le vecteur d'initialisation VI", contenant le compteur d'empreinte CEⱼ incrémenté, au couple de compteurs globaux formé par le compteur global mémorisé GC'ₖ et le compteur global adjacent mémorisé GC'ₖ₊₁.

Enfin, le module de gestion 220 est programmé pour commander à l'unité de contrôle 225 l'enregistrement du motif d'intégrité actualisé en remplacement du motif d'intégrité enregistré IM_{I} correspondant, et commander la mémorisation des nouvelles valeurs du compteur global mémorisé GC'ₖ et du compteur d'empreinte CEⱼ à l'unité de contrôle 224, ainsi que l'enregistrement de l'empreinte de compteur actualisée en remplacement de l'empreinte de compteur mémorisée E'ᵢ correspondante. A cet effet, le module de gestion 220 est programmé pour transmettre à l'unité de contrôle 225 une première requête en écriture comprenant l'adresse @IM_{I} du motif d'intégrité IM_{I} à remplacer et la valeur du motif d'intégrité actualisé, et pour transmettre à l'unité de contrôle 224 une pluralité de deuxièmes requêtes en écriture comprenant chacune l'adresse @GCₖ du compteur global incrémenté, respectivement l'adresse du compteur d'empreinte CEⱼ, respectivement l'adresse @Eᵢ de l'empreinte mémorisée E'ᵢ à remplacer, accompagnée de la nouvelle valeur dudit compteur global mémorisé GC'ₖ, respectivement de la nouvelle valeur dudit compteur d'empreinte CEⱼ, respectivement de la valeur de l'empreinte actualisée.

Pour chaque deuxième requête en écriture reçues, l'unité de contrôle 224 est programmée pour entrer la nouvelle valeur comprise dans ladite requête dans le bloc mémoire 250, 252 de la deuxième sous-mémoire 264 de la mémoire cache 222 correspondant à l'adresse contenue dans ladite requête. L'unité de contrôle 224 est également programmée pour simultanément modifier la valeur du bit de contrôle stocké dans le bloc mémoire correspondant 258, 260 de la troisième sous-mémoire 266 pour qu'il indique que la donnée mémorisée GC'ₖ, E'ᵢ dans ledit bloc mémoire 250, 252 est différente de la donnée enregistrée GCₖ, Eᵢ correspondante.

Un procédé 300 d'accès à une information I_{I} stockée dans la mémoire externe 214 va maintenant être décrit, en référence à la Figure 6.

Tout d'abord, lors d'une étape initiale 302, l'unité de calcul 216 émet une requête d'accès à l'information I_{I}. Cette requête d'accès comprend l'adresse @W_{I} du bloc de données W_{I} contenant l'information I_{I}.

La requête d'accès est reçue par le module de gestion 220. Celui-ci transmet à l'unité de contrôle 225, lors d'une étape 304, une première requête de lecture du bloc de données W_{I} positionné à l'emplacement correspondant à l'adresse @W_{I}, ainsi que du motif d'intégrité IM_{I} associé audit bloc de données W_{I}.

La première requête est reçue par l'unité de contrôle 225. Celle-ci lit le bloc de données W_{I}, et le motif d'intégrité IM_{I} et, lors d'une étape 306, transmet leurs valeurs au module de gestion 220.

Dans le même temps, le module de gestion 220 identifie l'adresse @GCₖ du compteur global enregistré GCₖ associé au bloc de données W_{I}, ainsi que l'adresse @Eᵢ de l'empreinte de compteur enregistrée Eᵢ associée audit compteur GCₖ. Il transmet au module de contrôle 224, lors d'une étape 310, une requête d'accès à un compteur global mémorisé GC'ₖ et à une empreinte de compteur mémorisée E'ᵢ correspondant respectivement audit compteur global enregistré GCₖ et à ladite empreinte de compteur enregistrée Eᵢ. Cette requête d'accès comprend les adresses @GCₖ et @Eᵢ.

Ladite requête est reçue par l'unité de contrôle 224. Lors d'étapes 312 et 314, pour chaque adresse @GCₖ, @Eᵢ de la requête, l'unité de contrôle 224 consulte une première sous-mémoire 262 de la mémoire cache 222 pour voir si, dans l'un des blocs mémoires 254, 256 situés à une profondeur de la première sous-mémoire 262 correspondant à l'index de ladite adresse @GCₖ, @Eᵢ est mémorisée la balise de ladite adresse puis, en cas de correspondance entre le contenu de l'un des blocs mémoires 254, 256 et la balise de l'adresse, l'unité de contrôle 224 lit un bloc mémoire 250, 252 situé à un emplacement correspondant d'une deuxième sous-mémoire 264 de la mémoire cache 222, et retourne le contenu dudit bloc mémoire 250, 252 au module de gestion 220.

En cas de non-correspondance entre la balise de l'adresse @GCₖ et le contenu de chacun des blocs mémoires 254, 256 positionnés à ladite profondeur :
- lors d'une étape 316, l'unité de contrôle 224 émet, à destination de l'unité de contrôle 225, une troisième requête de lecture de la donnée enregistrée positionnée dans la mémoire externe 214 à l'emplacement correspondant à l'adresse @GCₖ,
- la troisième requête étant reçue par l'unité de contrôle 225, celle-ci lit la donnée enregistrée à l'adresse @GCₖ dans la mémoire externe 214, constituée en l'occurrence par l'association du compteur global enregistré GCₖ et d'un compteur global enregistré adjacent GCₖ₊₁, et transmet les valeurs du compteur global enregistré GCₖ et du compteur global enregistré adjacent GCₖ₊₁ au module de gestion 220 et à l'unité de contrôle 224 lors d'une étape 317,
- puis l'unité de contrôle 224 mémorise une copie du compteur global enregistré GCₖ et du compteur global enregistré adjacent GCₖ₊₁ dans la mémoire cache 222, lors d'une étape 318, et
- finalement, lors d'une étape 319, le module de gestion 220 contrôle l'intégrité du compteur global enregistré GCₖ.

En cas de non-correspondance entre la balise de l'adresse @Eᵢ et le contenu de chacun des blocs mémoires 254, 256 positionnés à ladite profondeur :
- lors d'une étape 320, l'unité de contrôle 224 émet, à destination de l'unité de contrôle 225, une quatrième requête de lecture de la donnée enregistrée positionnée dans la mémoire externe 214 à l'emplacement correspondant à l'adresse @Eᵢ,
- la quatrième requête étant reçue par l'unité de contrôle 225, celle-ci lit la donnée enregistrée à l'adresse @Eᵢ dans la mémoire externe 214, constituée en l'occurrence par l'empreinte de compteur enregistrée Eᵢ, et transmet la valeur de l'empreinte de compteur enregistrée Eᵢ au module de gestion 220 et à l'unité de contrôle 224 lors d'une étape 321,
- puis l'unité de contrôle 224 mémorise une copie de l'empreinte de compteur enregistrée Eᵢ dans la mémoire cache 222, lors d'une étape 322.

Les étapes de mémorisation 318 et 322 comprennent les sous-étapes suivantes :
- recherche d'un bloc mémoire 250, 252 libre disposé à la profondeur de la deuxième sous-mémoire 264 correspondant à l'index de l'adresse @GCₖ, @Eᵢ,
- en cas d'identification d'un bloc mémoire 250, 252 libre, stockage de la copie des compteurs globaux enregistrés GCₖ, GCₖ₊₁, respectivement de la copie de l'empreinte de compteur enregistrée Eᵢ, dans ce bloc mémoire 250, 252, la balise de l'adresse @GCₖ, respectivement @Eᵢ, étant stockée dans un bloc mémoire 254, 256 situé à un emplacement correspondant de la première sous-mémoire 262 de la mémoire cache 222,
- en cas d'occupation de tous les blocs mémoires 250, 252 disposés à ladite profondeur :
   o sélection d'un bloc mémoire aléatoire parmi lesdits blocs mémoires 250, 252, ou dans celui des blocs mémoires 250, 252 dont l'utilisation remonte au plus longtemps,
   o contrôle que la valeur de la donnée GC'ₖ|GC'ₖ₊₁, E'ᵢ mémorisée dans le bloc mémoire 250, 252 sélectionné est égale à la valeur de la donnée enregistrée GCₖ|GCₖ₊₁, Eᵢ correspondante dans la mémoire externe 214 ; à cet effet, l'unité de contrôle 224 contrôle l'état d'un bit de contrôle stocké dans le bloc mémoire correspondant 258, 260 de la troisième sous-mémoire 266 et, selon l'état dudit bit de contrôle, en déduit si la valeur de la donnée mémorisée GC'ₖ|GC'ₖ₊₁, E'ᵢ est égale ou non à la valeur de la donnée enregistrée GCₖ|GCₖ₊₁, Eᵢ correspondante,
   o en cas de différence de valeurs entre la donnée mémorisée GC'ₖ|GC'ₖ₊₁, E'ᵢ et la donnée enregistrée GCₖ|GCₖ₊₁, Eᵢ correspondante, copie de la valeur de la donnée mémorisée GC'ₖ|GC'ₖ₊₁, E'ᵢ dans la mémoire externe 214 en remplacement de la valeur de la donnée enregistrée GCₖ|GCₖ₊₁, Eᵢ correspondante, et
   o stockage de la copie des compteurs globaux enregistrés GCₖ, GCₖ₊₁, respectivement de la copie de l'empreinte de compteur enregistrée Eᵢ, dans le bloc mémoire sélectionné, la balise de l'adresse @GCₖ, respectivement @Eᵢ, étant stockée dans un bloc mémoire 254, 256 situé à un emplacement correspondant de la première sous-mémoire 262 de la mémoire cache 222.

L'étape de contrôle d'intégrité 319 comprend les sous-étapes suivantes :
- calcul, lors d'une étape 324, de la valeur d'une empreinte de compteur calculée E^{c}ᵢ associée audit compteur GCₖ, par application de la clé de chiffrage 230 utilisant le vecteur d'initialisation VI", contenant le compteur d'empreinte CEⱼ, sur le résultat de la concaténation des compteurs globaux GCₖ et GCₖ₊₁, puis
- comparaison de ladite valeur calculée E^{c}ᵢ à la valeur de l'empreinte de compteur mémorisée E'ᵢ correspondante lors d'une étape 326 ou, si une telle empreinte de compteur mémorisée E'ᵢ n'existe pas, à l'empreinte de compteur enregistrée Eᵢ correspondante, lors d'une étape 327, le compteur global enregistré GCₖ étant déclaré intègre en cas d'égalité des valeurs, et
- en cas de différence entre les valeurs, envoi d'un message d'erreur à l'unité de calcul 216, lors d'une étape 328.

Lorsque le compteur global enregistré GCₖ associé au bloc de données W_{I} a été déclaré intègre lors de l'étape 319, ou lorsqu'un compteur global mémorisé GC'ₖ associé au bloc de données W_{I} a été identifié lors de l'étape 312, le module de gestion 220 déchiffre, lors d'une étape 330, le bloc de données W_{I}. A cet effet, il applique la clé de chiffrement 226 au bloc de données W_{I}, en utilisant le vecteur d'initialisation VI.

Ensuite, lors d'une étape 332, le module de gestion 220 contrôle l'intégrité du bloc de données W_{I}. A cet effet, le module de gestion 220 calcule, lors d'une sous-étape 334, un motif d'intégrité IM^{c}_{I} du bloc de données W_{I}, par application de la clé de chiffrage 228 utilisant le vecteur d'initialisation VI' au bloc de données W_{I}. Puis, lors d'une étape 338, le module de gestion 220 compare la valeur du motif d'intégrité calculé IM^{c}_{I} à la valeur du motif d'intégrité enregistré IM_{I} et, en cas d'égalité des valeurs, déclare le bloc de données W_{I} intègre.

Lorsque le bloc de données W_{I} est déclaré intègre, le module de gestion 220 transmet l'information I_{I} à l'unité de calcul 216 lors d'une étape 340. Dans tous les autres cas, le module de gestion 220 exécute une étape 342 d'envoi d'un message d'erreur à l'unité de calcul 216.

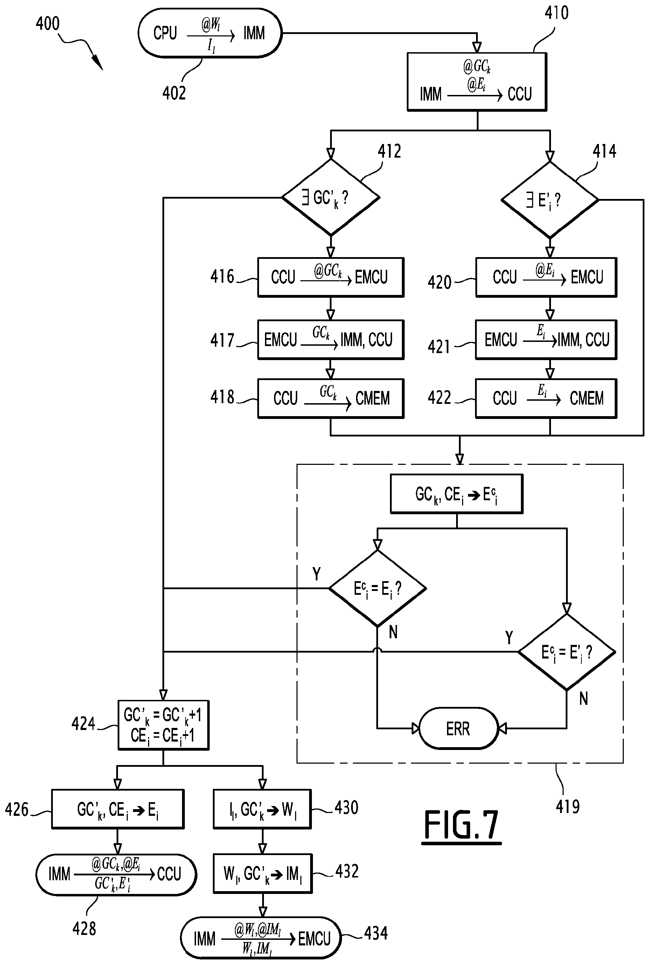

Un procédé 400 de stockage d'une information I_{I} dans la mémoire externe 214 va maintenant être décrit, en référence à la Figure 7.

Tout d'abord, lors d'une étape initiale 402, l'unité de calcul 216 émet une requête d'écriture de l'information I_{I}. Cette requête d'accès comprend l'information I_{I} et l'adresse @W_{I} du bloc de données W_{I} dans lequel inscrire l'information I_{I}.

La requête d'accès est reçue par le module de gestion 220. Celui-ci identifie l'adresse @GCₖ du compteur global enregistré GCₖ associé au bloc de données Wₗ, ainsi que l'adresse @Eᵢ de l'empreinte de compteur enregistrée Eᵢ associée audit compteur GCₖ. Il transmet au module de contrôle 224, lors d'une étape 410, une requête d'accès à un compteur global mémorisé GC'ₖ et à une empreinte de compteur mémorisée E'ᵢ correspondant respectivement audit compteur global enregistré GCₖ et à ladite empreinte de compteur enregistrée Eᵢ. Cette requête d'accès comprend les adresses @GCₖ et @Eᵢ.

Ladite requête est reçue par l'unité de contrôle 224. Lors d'étapes 412 et 414, pour chaque adresse @GCₖ, @Eᵢ de la requête, l'unité de contrôle 224 consulte une première sous-mémoire 262 de la mémoire cache 222 pour voir si, dans l'un des blocs mémoires 254, 256 situés à une profondeur de la première sous-mémoire 262 correspondant à l'index de ladite adresse @GCₖ, @Eᵢ est mémorisée la balise de ladite adresse puis, en cas de correspondance entre le contenu de l'un des blocs mémoires 254, 256 et la balise de l'adresse, l'unité de contrôle 224 lit un bloc mémoire 250, 252 situé à un emplacement correspondant d'une deuxième sous-mémoire 264 de la mémoire cache 222, et retourne le contenu dudit bloc mémoire 250, 252 au module de gestion 220.

En cas de non-correspondance entre la balise de l'adresse @GCₖ et le contenu de chacun des blocs mémoires 254, 256 positionnés à la profondeur de la première sous-mémoire 262 correspondant à l'index de ladite adresse @GCₖ, des étapes 416, 417, 418, 419, identiques respectivement aux étapes 316, 317, 318 et 319 du procédé d'accès 300, sont mises en oeuvre.

En cas de non-correspondance entre la balise de l'adresse @Eᵢ et le contenu de chacun des blocs mémoires 254, 256 positionnés à la profondeur de la première sous-mémoire 262 correspondant à l'index de ladite adresse @Eᵢ, des étapes 420, 421, 422, identiques respectivement aux étapes 320, 321, 322 du procédé d'accès 300, sont mises en oeuvre.

Lorsque le compteur global enregistré GCₖ associé au bloc de données W_{I} a été déclaré intègre lors de l'étape 419, ou lorsqu'un compteur global mémorisé GC'ₖ associé au bloc de données W_{I} a été identifié lors de l'étape 412, le module de gestion 220 :
- commande, lors d'une étape 424, l'incrémentation du compteur global mémorisé GC'ₖ, celui-ci étant constitué par le compteur identifié lors de l'étape 412 ou par la copie mémorisée lors de l'étape 418, et l'incrémentation du compteur CEⱼ de l'empreinte E'ᵢ dudit compteur GC'ₖ, la nouvelle valeur du compteur d'empreinte CEⱼ étant ensuite mémorisée dans la mémoire 221, et
- calcule, lors d'une étape 426, une empreinte de compteur E'ᵢ actualisée fonction de la valeur incrémentée du compteur global mémorisé CG'ₖ et de la valeur incrémentée du compteur d'empreinte CEⱼ.

Le module de gestion 220 commande ensuite à l'unité de contrôle 224, lors d'une étape 428, la mémorisation des nouvelles valeurs du compteur global mémorisé GC'ₖ et de l'empreinte de compteur actualisée E'ᵢ.

A cet effet, le module de gestion 220 transmet à l'unité de contrôle 224 une requête en écriture comprenant l'adresse @GCₖ du compteur global incrémenté et l'adresse @Eᵢ de l'empreinte E'ᵢ actualisée, accompagnées respectivement de la nouvelle valeur dudit compteur global mémorisé GC'ₖ et de la valeur de l'empreinte E'ᵢ actualisée. Chaque requête en écriture est reçue par l'unité de contrôle 224, qui entre les nouvelles valeurs comprise dans la requête dans les blocs mémoires 250, 252 de la deuxième sous-mémoire 264 de la mémoire cache 222 correspondant aux adresses contenues dans ladite requête. Simultanément, l'unité de contrôle 224 modifie la valeur des bits de contrôle stockés dans les blocs mémoire correspondant 258, 260 de la troisième sous-mémoire 266 pour qu'ils indiquent que les données GC'ₖ, E'ᵢ mémorisées dans lesdits blocs mémoire 250, 252 sont différentes des données enregistrées GCₖ, Eᵢ correspondantes.

Dans le même temps, lors d'une étape 430, le module de gestion 220 chiffre l'information I_{I} de façon à obtenir un nouveau bloc de données W_{I}. A cet effet, le module de gestion 220 applique la clé de chiffrement 226 au bloc de données W_{I} en utilisant le premier vecteur d'initialisation VI, le vecteur d'initialisation VI contenant la valeur incrémentée du compteur mineur Γ_{I}.

Puis, lors d'une étape 432, le module de gestion 220 calcule le motif d'intégrité IM_{I} du nouveau bloc de données W_{I}. A cet effet, il applique la deuxième clé de chiffrement 228 au nouveau bloc de données W_{I} en employant le deuxième vecteur d'initialisation VI', le vecteur d'initialisation VI' contenant la valeur incrémentée du compteur mineur Γ_{I}.

Enfin, lors d'une étape 434, le module de gestion 220 commande à l'unité de contrôle 225 l'enregistrement du nouveau bloc de données W_{I} et du motif d'intégrité IM_{I} associé dans la mémoire externe 214.

A cet effet, le module de gestion 220 transmet à l'unité de contrôle 225 une requête en écriture comprenant l'adresse @W_{I} où enregistrer le nouveau bloc de données W_{I} et l'adresse @IM_{I} où enregistrer le nouveau motif d'intégrité IM_{I}, accompagnées respectivement du nouveau bloc de données W_{I} et du nouveau motif d'intégrité IM_{I}. Chaque requête en écriture est reçue par l'unité de contrôle 225, qui enregistre le nouveau bloc de données W_{I} et le nouveau motif d'intégrité IM_{I} à des emplacements de la mémoire externe 214 correspondant aux adresses contenues dans ladite requête, en remplacement des données précédemment inscrites à ces emplacements.

Lorsque la mémoire cache 222 est saturée, le module de gestion 220 commande l'éviction des lignes de cache de la mémoire cache 222.

A cet effet, le module de gestion 220 émet une requête d'éviction à destination de l'unité de contrôle 224. Lorsque l'unité de contrôle 224 reçoit cette requête, elle contrôle, pour chaque donnée GC'ₖ|GC'ₖ₊₁, E'ᵢ mémorisée dans un bloc mémoire 250, 252 de la deuxième sous-mémoire 264 de la mémoire cache, l'état d'un bit de contrôle stocké dans le bloc mémoire correspondant 258, 260 de la troisième sous-mémoire 266, et :
- si l'état du bit de contrôle indique que la valeur de la donnée mémorisée GC'ₖ|GC'ₖ₊₁, E'ᵢ est égale à la valeur de la donnée enregistrée GCₖ|GCₖ₊₁, Eᵢ correspondante, elle efface la donnée mémorisée GC'ₖ|GC'ₖ₊₁, E'ᵢ, ou
- si l'état du bit de contrôle indique que la valeur de la donnée mémorisée GC'ₖ|GC'ₖ₊₁, E'ᵢ est différente de la valeur de la donnée enregistrée GCₖ|GCₖ₊₁, Eᵢ correspondante, elle commande à l'unité de contrôle 225 l'enregistrement d'une copie de la donnée mémorisée GC'ₖ|GC'ₖ₊₁, E'ᵢ dans la mémoire externe 214, à l'emplacement correspondant à l'adresse ayant pour index la profondeur du bloc mémoire 250, 252 et pour balise la balise mémorisée dans le bloc mémoire 254, 256 correspondant de la première sous-mémoire 262, puis efface la donnée mémorisée GC'ₖ|GC'ₖ₊₁, E'ᵢ.

On comprend aisément que l'invention décrite ci-dessus permet d'empêcher les attaques par rejeu, dans la mesure où, si un attaquant tentait de rejouer une donnée en remplaçant un compteur global GCₖ et l'empreinte associée Eᵢ par leurs valeurs antérieures respectives, le module de gestion 220 calculerait une empreinte calculé E'ᵢ nécessairement différente de l'empreinte rejouée Eᵢ, puisqu'il utiliserait pour ce faire un vecteur d'initialisation VI" différent du vecteur d'initialisation utilisé lors du calcul de l'empreinte rejouée Eᵢ, du fait que le compteur d'empreinte CEⱼ aurait entre-temps changé de valeur.

En outre, cette invention est économique en capacité de mémoire sécurisée, dans la mesure où seuls les compteurs d'empreinte CEⱼ, qui emploient moins de bits que les empreintes Eᵢ, doivent être conservés en permanence dans la mémoire sécurisée 221.

Enfin, grâce à cette invention, il n'est pas nécessaire d'aller rechercher à plusieurs reprises dans la mémoire externe 214 des données nécessaires au contrôle de l'intégrité d'un même compteur global GCₖ. Les accès à la mémoire externe 214 sont ainsi réduits, et donc le système peu ralenti.

## Revendications

1. Procédé d'accès à des informations (I_{I}) stockées de manière sécurisée dans des blocs de données (W_{I}) d'une mémoire non sécurisée (214), à chaque bloc de données (W_{I}) étant associé un compteur (GCₖ) enregistré dans la mémoire non sécurisée (214), ledit compteur (GCₖ) étant adapté pour être incrémenté à chaque écriture dudit bloc de données (W_{I}), le procédé comprenant les étapes suivantes :
- premier accès (300, 400) à un bloc de données (W_{I}), ledit premier accès (300, 400) comprenant les sous-étapes suivantes :
o lecture (317, 417), dans la mémoire non sécurisée (214), d'un compteur enregistré (GCₖ) associé audit bloc de données (W_{I}),
o contrôle (319, 419) de l'intégrité du compteur enregistré (GCₖ), et
o mémorisation (318, 418), dans une mémoire sécurisée (222), d'un compteur mémorisé (GC'ₖ) consistant en une copie dudit compteur enregistré (GCₖ), puis
- deuxième accès (300) audit bloc de données (W_{I}), ledit deuxième accès (300) comprenant les sous-étapes suivantes :
o lecture (312) du compteur mémorisé (GCk') depuis la mémoire sécurisée (222), et
o contrôle (332) de l'intégrité du bloc de données (W_{I}) au moyen de la valeur du compteur mémorisé (GC'ₖ).

2. Procédé selon la revendication 1, dans lequel un indicateur de compteur (258) est associé au ou à chaque compteur mémorisé (GC'ₖ), ledit indicateur (258) signalant si le compteur mémorisé (GC'ₖ) présente une valeur différente ou non de celle du compteur correspondant (GCₖ) enregistré dans la mémoire non sécurisée (214).

3. Procédé selon la revendication 2, comprenant les étapes suivantes :
- contrôle de l'indicateur de compteur (258) associé à un compteur mémorisé (GC'ₖ),
- si ledit indicateur de compteur (258) signale que le compteur mémorisé (GC'ₖ) présente une valeur différente de celle du compteur correspondant (GCₖ) enregistré dans la mémoire non sécurisée (214), remplacement de la valeur dudit compteur enregistré (GCₖ) par la valeur dudit compteur mémorisé (CG'ₖ), et
- effacement du compteur mémorisé (GC'ₖ) de la mémoire sécurisée (222).

4. Procédé selon l'une quelconque des revendications précédentes, dans lequel l'adresse (240, @GCₖ) de chaque compteur (GCₖ) enregistré dans la mémoire non sécurisée (214) comprend un premier bloc d'adresse (244) et un deuxième bloc d'adresse (242,TR(GCₖ)), au premier bloc d'adresse (244) étant associée une pluralité de premiers espaces de stockage (250) de la mémoire sécurisée (222), et, lors de l'étape de mémorisation, la valeur du compteur enregistré (GCₖ) est mémorisée dans l'un desdits premiers espaces de stockage (250), le deuxième bloc d'adresse (242, TR(GCₖ)) étant mémorisé dans un deuxième espace de stockage (256) de la mémoire sécurisée (222), associé au premier espace de stockage (250) où est stocké le compteur mémorisé (GC'ₖ).

5. Procédé selon l'une quelconque des revendications précédentes, dans lequel la mémoire sécurisée (222) présente une capacité inférieure à la capacité nécessaire au stockage de tous les compteurs enregistrés (GCₖ).

6. Procédé selon l'une quelconque des revendications précédentes, dans lequel à chaque bloc de données (W_{I}) est associé un motif (IM_{I}) d'intégrité du bloc de données (W_{I}), enregistré dans la mémoire non sécurisée (214), la valeur dudit motif d'intégrité (IM_{I}) dépendant de la valeur du compteur (GCₖ) associé audit bloc de données (W_{I}), l'étape de contrôle d'intégrité (332) du bloc de données (W_{I}) comprenant les sous-étapes suivantes :
- calcul (334) d'un motif d'intégrité calculé (IM^{c}_{I}) du bloc de données (W_{I}), à partir du bloc de données (W_{I}) et du compteur mémorisé (GC'ₖ), et
- comparaison (338) du motif d'intégrité calculé (IM^{c}_{I}) avec le motif d'intégrité enregistré (IM_{I}),
le bloc de données (W_{I}) étant déclaré intègre à condition que le motif d'intégrité calculé (IM^{c}_{I}) soit égal au motif d'intégrité enregistré (IM_{I}).

7. Procédé selon l'une quelconque des revendications précédentes, dans lequel le premier accès (400) au bloc de données (W_{I}) comprend une étape (424) d'incrémentation du compteur mémorisé (GC'ₖ).

8. Procédé selon l'une quelconque des revendications précédentes, dans lequel l'étape (319, 419) de contrôle de l'intégrité du compteur (GCₖ) comporte les sous-étapes suivantes :
- calcul (324) d'au moins une empreinte de compteur (Eᵢ^{c}) associée au compteur (GCₖ) en fonction de la valeur dudit compteur (GCₖ), et
- comparaison (326, 327) de la ou chaque empreinte de compteur calculée (Eᵢ^{c}) avec une empreinte de compteur correspondante (E'ᵢ) mémorisée dans la mémoire sécurisée (222), lorsqu'une telle empreinte de compteur mémorisée (E'ᵢ) existe, ou, lorsqu'une telle empreinte de compteur mémorisée (E'ᵢ) n'existe pas, avec une empreinte de compteur correspondante (Eᵢ) enregistrée dans la mémoire non sécurisée (214).

9. Procédé selon les revendications 7 et 8 prises ensemble, dans lequel le premier accès (400) au bloc de données (W_{I}) comprend les étapes suivantes :
- calcul (426) d'au moins une empreinte de compteur actualisée associée au compteur (GCₖ) en fonction de la valeur incrémentée du compteur mémorisé (GC'ₖ), et
- mémorisation (428), dans la mémoire sécurisée (222), de la ou chaque empreinte de compteur actualisée, en remplacement de l'empreinte de compteur mémorisée (E'ᵢ) correspondante lorsqu'une telle empreinte de compteur mémorisée existe.

10. Procédé selon la revendication 9, dans lequel le premier accès (400) au bloc de données (W_{I}) comprend une étape (424) d'incrémentation d'un compteur d'empreinte (CEᵢ) mémorisé dans une mémoire sécurisée (221), l'empreinte de compteur actualisée associée au compteur (GCₖ) étant calculée en fonction de la valeur incrémentée dudit compteur d'empreinte (CEᵢ).

11. Procédé selon l'une quelconque des revendications 8 à 10, dans lequel le premier accès (300, 400) au bloc de données (W_{I}) comprend, pour chaque empreinte de compteur enregistrée (Eᵢ) qui est comparée lors du contrôle d'intégrité à une empreinte de compteur calculée (E^{c}ᵢ), une étape (322, 422) de mémorisation, dans une mémoire sécurisé (221), d'une empreinte de compteur mémorisée (E'ᵢ) consistant en une copie de ladite empreinte de compteur enregistrée (Eᵢ).

12. Procédé selon la revendication 11, dans lequel un indicateur d'empreinte (260) est associé à chaque empreinte de compteur (E'ᵢ) mémorisée dans la mémoire sécurisée (222), ledit indicateur (260) signalant si l'empreinte de compteur mémorisée (E'ᵢ) présente une valeur différente ou non de celle de l'empreinte de compteur enregistrée (Eᵢ) correspondante.

13. Procédé selon la revendication 12, comprenant les étapes suivantes :
- contrôle de l'indicateur d'empreinte (260) associé à une empreinte de compteur mémorisée (E'ᵢ)
- si ledit indicateur d'empreinte (260) signale que l'empreinte de compteur mémorisée (E'ᵢ) présente une valeur différente de celle de l'empreinte de compteur correspondante (Eᵢ) enregistrée dans la mémoire non sécurisée (214), remplacement de la valeur de ladite empreinte de compteur enregistrée (Eᵢ) par la valeur de ladite empreinte de compteur mémorisée (E'ᵢ), et
- effacement de l'empreinte de compteur mémorisée (E'ᵢ) de la mémoire sécurisée (222).

14. Procédé selon l'une quelconque des revendications 8 à 13, dans lequel une unique empreinte de compteur (E^{c}ᵢ) associée au compteur (GCₖ) est calculée, et le compteur (GCₖ) est déclaré intègre si et seulement si ladite empreinte de compteur calculée (E^{c}ᵢ) est égale à l'empreinte de compteur (Eᵢ, E'ᵢ) avec laquelle elle est comparée.

## Patentansprüche

1. Verfahren zum Zugriff auf Informationen (I_{I}), die auf gesicherte Weise in Datenblöcken (W_{I}) eines nicht-gesicherten Speichers (214) gespeichert sind, wobei jedem Datenblock (W_{I}) ein Zähler (GCₖ) zugeordnet ist, der in dem nicht-gesicherten Speicher (214) registriert ist, wobei der Zähler (GCₖ) eingerichtet ist, bei jedem Schreiben des Datenblocks (W_{I}) inkrementiert zu werden,
wobei das Verfahren die folgenden Schritte aufweist:
- Einen ersten Zugriff (300, 400) auf einen Datenblock (W_{I}), wobei der erste Zugriff (300, 400) die folgenden Unterschritte aufweist:
o Lesen (317, 417), in dem nicht-gesicherten Speicher (214), eines registrierten Zählers (GCₖ), der dem Datenblock (W_{I}) zugeordnet ist,
o Kontrolle (319, 419) der Integrität des gespeicherten Zählers (GCₖ) und
o Speichern (318, 418), in einem gesicherten Speicher (222), eines gespeicherten Zählers (GC'ₖ), der aus einer Kopie des registrierten Zählers (GCₖ) besteht, danach
- Einen zweiten Zugriff (300) auf den Datenblock (W_{I}), wobei der zweite Zugriff (300) die folgenden Unterschritte aufweist:
∘ Lesen (312) des gespeicherten Zählers (GC'ₖ) aus dem gesicherten Speicher (222) und
∘ Kontrolle (332) der Integrität des Datenblocks (W_{I}) mittels des Werts des gespeicherten Zählers (CG'ₖ).

2. Verfahren gemäß Anspruch 1, in dem ein Zählerindikator (258) dem oder jedem gespeicherten Zähler (GC'ₖ) zugeordnet ist, wobei der Indikator (258) anzeigt, ob der gespeicherte Zähler (GC'ₖ) einen unterschiedlichen Wert von dem des entsprechenden Zählers (GCₖ), der in dem nicht-gesicherten Speicher (214) registriert ist, hat oder nicht.

3. Verfahren gemäß Anspruch 2, aufweisend die folgenden Schritte:
- Kontrolle des Zählerindikators (258), der einem gespeicherten Zähler (GC'ₖ) zugeordnet ist,
- falls der Zählerindikator (258) anzeigt, dass der gespeicherte Zähler (GC'ₖ) einen unterschiedlichen Wert von dem des entsprechenden Zählers (GCₖ), der in dem nicht-gesicherten Speicher (214) registriert ist, hat, Ersetzen des Werts des registrierten Zählers (GCₖ) durch den Wert des gespeicherten Zählers (GC'ₖ), und
- Löschen des gespeicherten Zählers (GC'ₖ) aus dem gesicherten Speicher (222).

4. Verfahren gemäß irgendeinem der vorhergehenden Ansprüche, in dem die Adresse (240, @GCₖ) jedes Zählers (GCₖ), der in dem nicht-gesicherten Speicher (214) registriert ist, einen ersten Adressblock (244) und einen zweiten Adressblock (242, TR(GCₖ)) aufweist, wobei dem ersten Adressblock (244) eine Mehrzahl von ersten Speicherplätzen (250) in dem gesicherten Speicher (222) zugeordnet ist und beim Schritt des Speicherns der Wert des registrierten Zählers (GCₖ) an einem der ersten Speicherplätze (250) gespeichert wird, wobei der zweite Adressblock (242, TR(GCₖ)) an einem zweiten Speicherplatz (256) des gesicherten Speichers (222) gespeichert wird, der dem ersten Speicherplatz (250) zugeordnet ist, wo der gespeicherte Zähler (GC'ₖ) gespeichert ist.

5. Verfahren gemäß irgendeinem der vorhergehenden Ansprüche, in dem der gesicherte Speicher (222) eine Kapazität hat, die geringer ist als die Kapazität, die notwendig ist, um all die registrierten Zähler (GCₖ) zu speichern.

6. Verfahren gemäß irgendeinem der vorhergehenden Ansprüche, in dem jedem Datenblock (W_{I}) ein Integritätsmuster (IM_{I}) des Datenblocks (W_{I}) zugeordnet ist, das in dem nicht-gesicherten Speicher (214) gespeichert ist, wobei der Wert des Integritätsmusters (IM_{I}) von dem Wert des Zählers (GCₖ) abhängt, der dem Datenblock (W_{I}) zugeordnet ist, wobei der Schritt der Kontrolle der Integrität (332) des Datenblocks (W_{I}) die folgenden Unterschritte aufweist:
- Berechnung (334) eines berechneten Integritätsmusters (IM^{c}_{I}) des Datenblocks (W_{I}) ausgehend von dem Datenblock (W_{I}) des gespeicherten Zählers (GC'ₖ) und
- Vergleich (338) des berechneten Integritätsmusters (IM^{c}_{I}) mit dem registrierten Integritätsmuster (IM_{I}),
wobei der Datenblock (W_{I}) unter der Bedingung als integer deklariert wird, dass das berechnete Integritätsmuster (IM^{c}_{I}) gleich dem registrierten Integritätsmuster (IM_{I}) ist.

7. Verfahren gemäß irgendeinem der vorhergehenden Ansprüche, in dem der erste Zugriff (400) auf die Datenblöcke (W_{I}) einen Schritt (424) der Inkrementierung des gespeicherten Zählers (GC'ₖ) aufweist.

8. Verfahren gemäß irgendeinem der vorhergehenden Ansprüche, in dem der Schritt (319, 419) der Kontrolle der Integrität des Zählers (GCₖ) die folgenden Unterschritte aufweist:
- Berechnung (324) mindestens eines Zählerhashwerts (Eᵢ^{c}), der dem Zähler (GCₖ) zugeordnet ist, in Funktion des Werts des Zählers (GCₖ) und
- Vergleich (326, 327) des oder jedes berechneten Zählerhashwerts (Eᵢ^{c}) mit einem entsprechenden Zählerhashwert (E'ᵢ), der in dem gesicherten Speicher (222) gespeichert ist, wenn ein solcher gespeicherter Zählerhashwert (E'ᵢ) existiert oder wenn ein solcher gespeicherter Zählerhashwert (E'ᵢ) nicht existiert, mit einem entsprechenden Zählerhashwert (Eᵢ), der in dem nicht-gesicherten Speicher (214) registriert ist.

9. Verfahren gemäß den Ansprüchen 7 und 8 zusammengenommen, in dem der erste Zugriff (400) auf den Datenblock (W_{I}) die folgenden Schritte aufweist:
- Berechnung (426) mindestens eines aktualisierten Zählerhashwerts, der dem Zähler (GCₖ) zugeordnet ist, in Funktion des inkrementierten Werts des gespeicherten Zählers (GC'ₖ) und
- Speichern (428), in dem gesicherten Speicher (222), des oder jedes aktualisierten Zählerhashwerts, indem der entsprechende gespeicherte Zählerhashwert (E'ᵢ) ersetzt wird, wenn ein solcher gespeicherter Zählerhashwert existiert.

10. Verfahren gemäß Anspruch 9, in dem der erste Zugriff (400) auf den Datenblock (W_{I}) einen Schritt (424) der Inkrementierung eines Zählerhashwerts (CEᵢ) aufweist, der in einem gespeicherten Speicher (221) gespeichert ist, wobei der aktualisierte Zählerhashwert (GCₖ) in Funktion des inkrementierten Werts des Zählerhashwerts (CEᵢ) berechnet wird.

11. Verfahren gemäß irgendeinem der Ansprüche 8 bis 10, in dem der erste Zugriff (300, 400) auf den Datenblock (W_{I}) für jeden registrierten Zählerhashwert (Eᵢ), der bei der Kontrolle der Integrität mit einem berechneten Zählerhashwert (E^{c}ᵢ) verglichen wird, einen Schritt (322, 422) des Speicherns, in einem gesicherten Speicher (221), eines gespeicherten Zählerhashwerts (E'ᵢ), der aus einer Kopie des registrierten Zählerhashwerts (Eᵢ) besteht, aufweist.

12. Verfahren gemäß Anspruch 11, in dem ein Hashwertindikator (260) jedem Zählerhashwert (E'ᵢ), der in dem gesicherten Speicher (222) gespeichert ist, zugeordnet ist, wobei der Indikator (260) anzeigt, ob der gespeicherte Zählerhashwert (E'i) einen unterschiedlichen Wert von dem des entsprechenden registrierten Zählerhashwerts (Eᵢ) hat oder nicht.

13. Verfahren gemäß Anspruch 12, aufweisend die folgenden Schritte:
- Kontrolle des Hashwertindikators (260), der einem gespeicherten Zählerhashwert (E'ᵢ) zugeordnet ist
- wenn der Hashwertindikator (260) anzeigt, dass der gespeicherte Zählerhashwert (E'ᵢ) einen Wert hat, der unterschiedlich ist von dem des entsprechenden Zählerhashwerts (Eᵢ), der in dem nicht-gesicherten Speicher (214) registriert ist, Ersetzen des Werts des registrierten Zählerhashwerts (Eᵢ) durch den Wert des gespeicherten Zählerhashwerts (E'ᵢ) und
- Löschen des gespeicherten Zählerhashwerts (E'ᵢ) aus dem gesicherten Speicher (222).

14. Verfahren gemäß irgendeinem der Ansprüche 8 bis 13, in dem ein eindeutiger Zählerhashwert (E^{c}ᵢ), der dem Zähler (GCₖ) zugeordnet ist, berechnet wird, und der Zähler (GCₖ) als integer deklariert wird, wenn und nur wenn der berechnete Zählerhashwert (E^{c}ᵢ) gleich dem Zählerhashwert (Eᵢ, E'ᵢ) ist, mit dem er verglichen wird.

## Claims

1. A method for accessing information (I_{I}) securely stored in data blocks (W_{I}) of a non-secure memory (214), each data block (W_{I}) being associated with a counter (GCₖ) recorded in said non-secure memory (214), said counter (GCₖ) being designed to be incremented each time said data block (W_{I}) is written,
said method comprising the following steps:
- first access (300, 400) to a data block (W_{I}), said first access (300, 400) comprising the following sub-steps:
∘ reading (317, 417), in said non-secure memory (214), a recorded counter (GCₖ) that is associated with said data block (W_{I});
∘ verifying (319, 419) the integrity of said recorded counter (GCₖ); and
∘ storing (318, 418), in a secure memory (222), a stored counter (GC'ₖ) that comprises a copy of said recorded counter (GCₖ) ; then
- second access (300) to said data block (W_{I}), said second access (300) comprising the following sub-steps:
∘ reading (312) said stored counter (GC'ₖ) from said secure memory (222); and
∘ verifying (332) the integrity of said data block (W_{I}) by means of the value of said stored counter (GC'ₖ).

2. The method according to claim 1, wherein a counter indicator (258) is associated with the one or more stored counters (GC'ₖ), said indicator (258) indicating whether or not said stored counter (GC'ₖ) has a value that is different to that of the corresponding counter (GCₖ) recorded in said non-secure memory (214).

3. The method according to claim 2, comprising the following steps:
- verifying said counter indicator (258) that is associated with a stored counter (GC'ₖ);
- replacing, if said counter indicator (258) indicates that said stored counter (GC'ₖ) has a value that is different to that of the corresponding counter (GCₖ) recorded in said non-secure memory (214), the value of said recorded counter (GCₖ) with the value of said stored counter (CG'ₖ); and
- deleting said stored counter (GC'ₖ) from said secure memory (222).

4. The method according to any one of the preceding claims, wherein the address (240, @GCₖ) of each counter (GCₖ) recorded in said non-secure memory (214) comprises a first address block (244) and a second address block (242, TR(GCₖ)), said first address block (244) being associated with a plurality of first storage areas (250) of said secure memory (222) and, during said storage step, the value of said recorded counter (GCₖ) is stored in one of said first storage areas (250), said second address block (242, TR(GCₖ)) being stored in a second storage area (256) of said secure memory (222) that is associated with said first storage area (250) where said stored counter (GC'ₖ) is stored.

5. The method according to any one of the preceding claims, wherein the capacity of said secure memory (222) is less than the capacity needed to store all of said recorded counters (GCₖ).

6. The method according to any one of the preceding claims, wherein each data block (W_{I}) is associated with an integrity pattern (IM_{I}) of said data block (W_{I}) recorded in said non-secure memory (214), the value of said integrity pattern (IM_{I}) depending on the value of said counter (GCₖ) that is associated with said data block (W_{I}), said step of verifying (332) the integrity of said data block (W_{I}) comprising the following sub-steps:
- computing (334) a computed integrity pattern (IM^{C}_{I}) of said data block (W_{I}) on the basis of said data block (W_{I}) and of said stored counter (GC'ₖ); and
- comparing (338) said computed integrity pattern (IM^{C}_{I}) with said recorded integrity pattern (IM_{I}),
said data block (W_{I}) being declared integral as long as said computed integrity pattern (IM^{C}_{I}) is equal to said recorded integrity pattern (IM_{I}).

7. The method according to any one of the preceding claims, wherein said first access (400) to said data block (W_{I}) comprises a step (424) of incrementing said stored counter (GC'ₖ).

8. The method according to any one of the preceding claims, wherein said step (319, 419) of verifying the integrity of said counter (GCₖ) comprises the following sub-steps:
- computing (324) at least one counter tag (Eᵢ^{c}) associated with said counter (GCₖ) according to the value of said counter (GCₖ); and
- comparing (326, 327) the one or more computed counter tags (Eᵢ^{c}) to a corresponding counter tag (E'ᵢ) stored in said secure memory (222) when such a stored counter tag (E'ᵢ) exists or to a corresponding counter tag (Eᵢ) recorded in said non-secure memory (214) when such a stored counter tag (E'ᵢ) does not exist.

9. The method according to claims 7 and 8 taken in combination, wherein said first access (400) to said data block (W_{I}) comprises the following steps:
- computing (426) at least one updated counter tag associated with said counter (GCₖ) according to the incremented value of said stored counter (GC'ₖ); and
- storing (428) the one or more updated counter tags in said secure memory (222) by replacing the corresponding stored counter tag (E'ᵢ) when such a stored counter tag exists.

10. The method according to claim 9, wherein said first access (400) to said data block (W_{I}) comprises a step (424) of incrementing a tag counter (CEᵢ) stored in a secure memory (221), the updated counter tag associated with said counter (GCₖ) being computed according to the incremented value of said tag counter (CEᵢ).

11. The method according to any one of claims 8 to 10, wherein said first access (300, 400) to said data block (W_{I}) comprises, for each recorded counter tag (Eᵢ) that is compared to a computed counter tag (E^{c}ᵢ) during the integrity verification, a step (322, 422) of storing a stored counter tag (E'ᵢ) in a secure memory (221), which counter tag comprises a copy of said recorded counter tag (Eᵢ).

12. The method according to claim 11, wherein a tag indicator (260) is associated with each counter tag (E'ᵢ) stored in said secure memory (222), said indicator (260) indicating whether or not said stored counter tag (E'ᵢ) has a value that is different to that of the corresponding recorded counter tag (Eᵢ).

13. The method according to claim 12, comprising the following steps:
- verifying said tag indicator (260) that is associated with a stored counter tag (E'ᵢ);
- replacing, if said tag indicator (260) indicates that said stored counter tag (E'ᵢ) has a value that is different to that of the corresponding counter tag (Eᵢ) recorded in said non-secure memory (214), the value of said recorded counter tag (Eᵢ) with the value of said stored counter tag (E'ᵢ); and
- deleting said stored counter tag (E'ᵢ) from said secure memory (222).

14. The method according to any one of claims 8 to 13, wherein a single counter tag (E^{c}ᵢ) that is associated with said counter (GCₖ) is computed and said counter (GCₖ) is declared integral only if and only if said computed counter tag (E^{c}ᵢ) is equal to the counter tag (Eᵢ, E'ᵢ) to which it is compared.
